# EUROPÄISCHE PATENTSCHRIFT

(11) **EP 1 118 065 B1**
(45) Veröffentlichungstag und Bekanntmachung des Hinweises auf die Patenterteilung: **03.09.2008**
(21) Anmeldenummer: 99947346.5
(22) Anmeldetag: 14.09.1999
(51) Int. Cl.: G07F 7/10

(54) **SCHALTUNGSANORDNUNG UND VERFAHREN ZUM AUTHENTIFIZIEREN DES INHALTS EINES SPEICHERBEREICHS**
CIRCUIT AND METHOD FOR AUTHENTICATING THE CONTENT OF A MEMORY LOCATION
CIRCUIT ET PROCEDE POUR AUTHENTIFIER LE CONTENU D'UNE ZONE DE MEMORISATION

(30) Priorität: 30.09.1998 EP 98118499
(43) Veröffentlichungstag der Anmeldung: 25.07.2001
(73) Patentinhaber: Infineon Technologies AG, 81669 München (DE)
(72) Erfinder: GAIL, Markus, D-81547 München (DE); POCKRANDT, Wolfgang, D-85293 Reichertshausen (DE); WEDEL, Armin, D-86415 Mering (DE); HESS, Erwin, D-85521 Ottobrunn (DE)
(74) Vertreter: Epping - Hermann - Fischer
(86) Internationale Anmeldenummer: PCT/EP1999/006802
(87) Internationale Veröffentlichungsnummer: WO 2000/019384

(56) Entgegenhaltungen:
- EP-A- 0 292 658
- EP-A- 0 563 997
- WO-A-89/02140
- WO-A-97/21198
- US-A- 5 675 541

## Beschreibung

Die Erfindung betrifft eine Schaltungsanordnung mit zumindest einem nicht-flüchtigen, elektrisch lösch- und beschreibbaren Speicherbereich, mit einer dem Speicherbereich zugeordneten und über Adreßleitungen mit ihm verbundenen Adressierschaltung sowie einer über eine Programmierleitung mit dem Speicherbereich verbundenen Programmierspannungsquelle. Die Erfindung betrifft außerdem ein Verfahren zum Authentifizieren des Inhalts eines nicht-flüchtigen, elektrisch beschreib- und löschbaren Speicherbereichs.

Eine solche Schaltungsanordnung und ein solches Verfahren sind aus der DE 44 39 266 A1 bekannt. Der Inhalt des dortigen in einem tragbaren Datenträger, beispielsweise einer Chipkarte enthaltenen Speicherbereichs repräsentiert einen Geldwert, der durch Ändern dieses Speicherbereichinhalts erhöht oder vermindert werden kann. Insbesondere bei Geldwerte repräsentierenden, aber auch bei anderen Daten ist ein Betrugs- und Manipulationsrisiko gegeben.

Die meisten Anwendungen solcher Datenträger setzen daher nicht nur die Echtheit der Karte und des Terminals, sondern auch die Authentizität der gespeicherten Daten voraus. Datenträger, die einen zugriffsgeschützten Speicherbereich enthalten, benötigen daher eine Freischaltlogik, die den Zugriff auf den geschützten Bereich erlaubt oder nicht. Eine solche Logik kann in einem einfachen Fall die Verifikation eines Codes durchführen, wie es in der WO 95/16238 beschrieben ist, oder bei aufwendigen Implementierungen, wie in der DE 44 39 266 A1, die Authentifikation des den Speicherinhalt verändernden Terminals vor einer Freischaltung verlangen. Der Zugriff muß dann zumindest so lange gewährt werden, bis eine bestimmte Datenmenge zur Karte übertragen werden konnte.

Eine Manipulationsmöglichkeit der Kartendaten ergibt sich nun dadurch, die die Datenübertragung nach dem Freischalten des geschützten Bereichs verfälscht wird oder die Karte bei fortwährender Spannungsversorgung, zum Beispiel mittels Batterie, in ein betrügerisches Terminal transferiert wird. Diese Manipulation mag zwar vom freischaltenden Terminal erkannt und vermerkt werden, aber dennoch kann die Verfälschung der Daten durch das betrügerische Terminal nicht verhindert werden. Besteht bei einer Anwendung keine Vernetzung aller Terminals, was kaum vorausgesetzt werden kann, ergibt sich die Möglichkeit, mit den gefälschten Daten an einem anderen Terminal einen Vorteil zu erzielen.

Eine Lösung, die Datenmanipulation nach dem Freischalten des geschützten Bereichs zu unterbinden, besteht darin, die Daten verschlüsselt mit Signatur abzuspeichern. Allerdings kann man sich dadurch nicht gegen einen Replay eines wertvollen Zustands schützen.

Die Verwendung von Flagspeichern im Zusammenspiel mit programmierbaren Speicherbereichen ist aus der EP 0563997 bekannt. Hier ist ein Verfahren beschrieben, bei dem Flagspeicher zur Überwachung von Schreibvorgängen in Speicherbereichen eingesetzt werden. Ein Flag wird gesetzt, sobald Daten in einen Speicherbereich geschrieben werden. Bei Beendigung der Schreiboperation erfolgt ein Rücksetzen des Flags.

Weiterhin ist in der WO 89/02140 ein Speicherzugriffsverfahren beschrieben, bei dem im Laufe eines Authentifikationsverfahrens in mehreren Stufen Flagspeicher gesetzt und gelöscht werden, unter anderem zur Überprüfung etwaiger Unterbrechungen des Datenaustausch zwischen Datenträger und Lesegerät. Die im hier beschriebenen Verfahren notwendigen Überprüfungen mehrerer Speicher und mehrmaliges Setzten/Rücksetzen der Flags ist vergleichsweise umständlich und erfordert eine hohe Anzahl an Rechenoperationen.

Die Aufgabe vorliegender Erfindung ist es daher, eine gattungsgemäße Schaltungsanordnung und ein Verfahren anzugeben, die oder das eine sichere und schnelle Authentifikation gespeicherter Daten erlaubt, und dabei mit geringem schaltungstechnischen und zeitlichen Aufwand auskommt.

Die Aufgabe wird durch eine Schaltungsanordnung gemäß Anspruch 1 und ein Verfahren gemäß Anspruch 2 gelöst.

Demgemäß verwendet die erfindungsgemäße Schaltungsanordnung permanente Flagspeicherzellen beziehungsweise Zellenkomplexe, die anzeigen, ob ihnen zugeordnete Speicherbereiche authentisierte Daten enthalten. Erfolgt nach dem Freischalten ein Zugriff auf einen Speicherbereich, der dessen Daten verändert, so wird dies in dem zugehörigen Flag vermerkt, indem dieses Flag gesetzt wird. Nachdem die Veränderung der Daten eines Speicherbereichs abgeschlossen ist, was sowohl durch Schreiben als auch durch Löschen erfolgen kann, muß eine Authentifikation dieses Speicherbereichs durch das Terminal erfolgen, die als Ergebnis das zugeordnete Flag zurücksetzt. Die Flagzellen werden in vorteilhafter Weiterbildung der Erfindung in die Authentifikation der korrespondierenden Speicherbereiche eingebunden, es ist jedoch auch möglich, den Zustand eines Flagspeichers zu einem anderen Zeitpunkt abzufragen, was aus Gründen der Manipulationssicherheit jedoch in verschlüsselter Form erfolgen sollte, was allerdings einen größeren Aufwand bedeutet. Mittels diesem nur kartenintern änderbaren Flag ist also überprüfbar, ob die Daten eines fraglichen Bereichs von einem authorisierten Terminal verändert wurden.

Die genannten Flagzellen lassen sich durch geringen zusätzlichen Hardwareaufwand realisieren. Die Häufigkeit der Daten-Authentifikationen kann je nach Speicherbereichsgröße flexibler als beim oben genannten Signaturverfahren gehandhabt werden, zumindest was Schaltungsanordnungen ohne Controller betrifft. Durch die geringere Anzahl von Authentifikationen kann der Aufwand für eine Authentifikation höher und das Verfahren damit sicherer gestaltet werden. Weiterhin kann das erhöhte Sicherheitsniveau durch die Flagzellen optional verwendet werden, ohne dadurch eine Sicherheitslücke im Chip zu eröffnen. Nicht gelöschte Flags weisen außerdem auf einen vorzeitigen Abbruch der Kartenprogrammierung hin, so daß diese Information nicht anderweitig gewonnen werden muß.

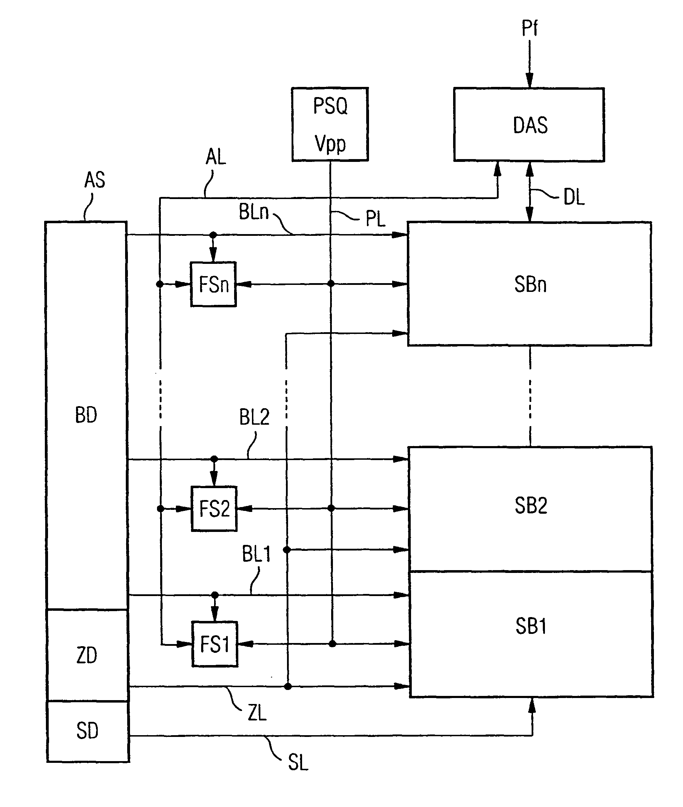

Die Erfindung wird nachfolgend anhand eines Ausführungsbeispiels mit Hilfe einer Figur näher erläutert. Die Figur zeigt dabei ein Blockschaltbild einer erfindungsgemäßen Schaltungsanordnung.

Das Blockschaltbild zeigt eine Schaltungsanordnung mit einem nicht-flüchtigen, elektrisch lösch- und beschreibbaren Speicher, der in eine Anzahl n von Speicherbereichen SB1...SBn unterteilt ist. Die Adressierung des Speichers erfolgt über eine Adressierschaltung AS, die in einen Bereichsdekodierer BD, einen Zeilendekodierer ZD und einen Spaltendekodierer SD unterteilt ist. Mittels des Bereichsdekodierers BD der Adressierschaltung AS kann über Bereichsleitungen BL1...BLn einer der Speicherbereiche SB1...SBn ausgewählt werden. In entsprechender Weise wird über die Zeilen- und Spaltendekodierer ZD, SD über Zeilenleitungen ZL und Spaltenleitungen SL ein entsprechender Speicherplatz im jeweiligen Speicherbereich ausgewählt. Daten können über Datenleitungen DL in die Speicherbereiche SB1...SBn eingeschrieben beziehungsweise aus diesen ausgelesen werden.

Zum Einschreiben von Daten in die Speicherbereiche SB1...SBn, was sowohl durch Programmieren als auch durch Löschen erfolgen kann, ist eine bezüglich der üblichen Versorgungsspannung hohe Spannung Vpp nötig, die im folgenden als Programmierspannung bezeichnet wird und die durch eine Programmierspannungsquelle PSQ über Programmierleitungen PL zur Verfügung gestellt wird.

In erfindungsgemäßer Weise ist nun jedem Speicherbereich SB1...SBn ein Flagspeicher FS1...FSn zugeordnet. Jeder der Flagspeicher FS1...FSn ist dabei mit der jeweiligen Bereichsleitung BL1...BLn verbunden, so daß mit der Adressierung eines bestimmten Speicherbereichs gleichzeitig der zugeordnete Flagspeicher adressiert wird. Außerdem ist jeder Flagspeicher FS1...FSn über die Programmierleitungen PL mit der Programmierspannungsquelle PSQ verbunden. Durch Auswahl eines Speicherbereichs und Anlegen der Programmierspannung Vpp wird somit automatisch auch der entsprechende Flagspeicher programmiert. Dadurch wird jede Änderung des Inhalts eines Speicherbereichs im jeweiligen Flagspeicher festgehalten und kann damit festgestellt werden.

Bei einer ordnungsgemäßen Änderung von Daten in einem Speicherbereich Sbi wird nach der Änderung überprüft, ob die richtigen Daten geschrieben wurden. Hierzu werden die geänderten Daten über die Datenleitungen DL wieder ausgelesen und in einer Datenauthentifizierschaltung DAS zu einer sogenannten Signatur verarbeitet, d.h. mittels eines speziellen Algorithmus verschlüsselt. Der gleiche Vorgang erfolgt im - nicht dargestellten - Terminal, welches die dort ermittelte Signatur zu der Karte sendet, was durch einen Pfeil Pf angedeutet ist, wo sie mit der dort ermittelten Signatur verglichen wird. Wenn die Daten übereinstimmen, wird der zugehörige Flagspeicher FSi von der Datenauthentifizierschaltung DAS über eine Authentifizierleitung AL derart angesteuert, daß der zuvor programmierte Flagspeicher FSi wieder gelöscht wird und somit der geänderte Datenspeicherinhalt authentifiziert ist. Gelöschte Flagspeicher FS1...FSn bedeuten also, daß alle zugeordneten Dateninhalte authentifiziert sind, während ein gesetztes Flag darauf hindeutet, daß eine nicht authentifizierte Änderung von Daten in dem zugehörigen Speicherbereich vorgenommen wurde.

In vorteilhafter Weise fließt der Zustand des Flagspeichers in die Signaturberechnung bzw. die Authentifizierung ein, wobei das Terminal von einem geschriebenen Zustand ausgehen muß, da Daten geändert wurden. Das Terminal muß daher über die Information verfügen, ob der geschriebene Zustand der programmierte oder gelöschte Zustand ist.

Die Erfindung wurde anhand einer Schaltungsanordnung beschrieben, bei der beim Ändern von Daten in einem Speicherbereich der zugeordnete Flagspeicher programmiert wird. Nach der Authentifizierung des geänderten Dateninhalts wird der Flagspeicher wieder gelöscht. Es ist jedoch genauso gut möglich, den Flagspeicher beim Ändern eines Speicherbereichs zu löschen und nach der Authentifizierung zu programmieren.

Im dargestellten Beispiel ist jedem Speicherbereich SB1...SBn ein Flagspeicher FS1...FSn zugeordnet. Dies erfolgt dadurch, daß die Flagspeicher FS1...FSn mit den Bereichsleitungen BL1...BLn verbunden sind. Es ist jedoch auch möglich, nur einzelne Zellen eines Speicherbereichs mittels eines Flag-speichers vor unberechtigter Änderung zu schützen, indem die entsprechenden Spalten- und Zeilenleitungen SL, ZL ebenfalls dem Flagspeicher FS1...FSn zugeführt werden und in geeigneter Weise mit der zugeordneten Bereichsleitung BL1...BLn verknüpft werden.

## Patentansprüche

1. Schaltungsanordnung mit zumindest einem nicht-flüchtigen elektrisch lösch- und beschreibbarer Speicherbereich (SB1...SBn), mit einer dem Speicherbereich zugeordneten und über Adressleitungen (SL, ZL, BL1...BLn) mit ihm verbundenen Adressierschaltung (AS; SD, ZD, BD) sowie einer über eine Programmierleitung (PL) mit dem Speicherbereich verbundenen Programmierspannungsquelle (PSQ),
**dadurch gekennzeichnet,**
**daß** jedem Speicherbereich (SB1...SBn) ein nicht-flüchtiger, elektrisch beschreib- und löschbarer Flagspeicher (FS1...FSn) zugeordnet ist, der über eine Adressleitung (BL1...BLn), die Programmierleitung (PL) und eine Authentifizierleitung (AL) mit dem zugeordneten Speicherbereich (SB1...SBn), der Programmierspannungsquelle (PSQ) und einer über eine Datenleitung (DL) mit dem Speicherbereich verbundenen Datenauthentifizierschaltung (DAS) derart verbunden ist, daß beim Verändern des Inhalts eines Speicherbereichs (SB1...SBn) der Zustand des zugehörigen Flagspeichers (FS1...FSn) gleichzeitig geändert wird und nach einer nach Beendigung einer Datenänderung erfolgten Authentifizierung des programmierten Speicherbereichinhalts der Flagspeicher (FS1...FSn) wieder in seinen Grundzustand gebracht wird.

2. Verfahren zum Authentifizieren des Inhalts eines nicht-flüchtigen, elektrisch beschreib- und löschbaren Speicherbereiches mit den Schritten in dieser Reihenfolge:
a) Adressieren des Speicherbereiches,
b) zu Schritt a) gleichzeitiges Adressieren eines dem Speicherbereich zugeordneten nicht-flüchtigen, elektrisch beschreib- und löschbaren Flag-Speichers zur Anzeige einer Änderung des Inhalts des Speicherbereiches,
c) Ändern des Inhalts des Speicherbereichs,
d) zu Schritt c) gleichzeitiges Ändern des Zustands des Flag-Speichers,
e) Authentifizierung des Speicherbereichinhaltes nach Beendigung der Datenänderung, und
f) Zurückbringen des dem Speicherbereich zugeordneten Flag-Speichers in den Grundzustand bei positiver Authentifizierung.

## Claims

1. Circuit arrangement having at least one nonvolatile, electrically erasable and writable memory area (SB1...SBn), having an addressing circuit (AS; SD, ZD, BD) assigned to the memory area and connected thereto via address lines (SL, ZL, BL1...BLn), and also having a programming voltage source (PSQ) connected to the memory area via a programming line (PL),
**characterized**
**in that** each memory area (SB1...SBn) is assigned a nonvolatile, electrically writable and erasable flag memory (FS1...FSn), which is connected via an address line (BL1...BLn), the programming line (PL) and an authentication line (AL) to the assigned memory area (SB1...SBn), the programming voltage source (PSQ) and a data authentication circuit (DAS), which is connected to the memory area via a data line (DL), in such a way that in the event of an alteration in the content of a memory area (SB1...SBn), the state of the associated flag memory (FS1...FSn) is changed simultaneously and, after authentication - effected after completion of a data change - of the programmed memory area content, the flag memory (FS1...FSn) is returned to its basic state.

2. Method for authenticating the content of a nonvolatile, electrically writable and erasable memory area comprising the following steps in this order:
a) addressing the memory area,
b) addressing - simultaneously with step a) - a nonvolatile, electrically writable and erasable flag memory - assigned to the memory area - for indicating a change in the content of the memory area,
c) changing the content of the memory area,
d) changing - simultaneously with step c) - the state of the flag memory,
e) authenticating the memory area content after completion of the data change, and
f) returning the flag memory assigned to the memory area to the basic state in the event of positive authentication.

## Revendications

1. Circuit comprenant au moins une zone ( SB1 ... SBn ) de mémoire non volatile, que l'on peut effacer et dans lequel on peut écrire d'une façon électrique, un circuit ( AS ; SD, ZD, BD ) d'adressage, qui est associé à la zone de mémoire et qui lui est relié par des lignes ( SL, ZL, BL1 ... BLn ) d'adresse, ainsi qu'une source ( PSQ ) de tension de programmation, reliée à la zone de mémoire par une ligne ( PL ) de programmation,
**caractérisé**
**en ce qu'**à chaque zone ( SB1 ... SBn ) de mémoire est associée une mémoire ( FS1 ... FSn ) à drapeau, non volatile, dans laquelle on peut écrire et qui peut être effacée d'une façon électrique et qui, par une ligne ( BL1 ... BLn ) d'adresse, par la ligne ( PL ) de programmation et par une ligne ( AL ) d'authentification, est reliée à la zone ( SB1 ... SBn ) de mémoire associée à la source ( PSQ ) de tension de programmation et à un circuit ( DAS ) d'authentification de données relié à la zone de mémoire par une ligne ( DL ) de données, de façon à ce que, lorsque le contenu d'une zone ( SB1 ... SBn ) de mémoire se modifie, l'état de la mémoire ( FS1 ... FSn ) à drapeau associée se modifie en même temps et, après une authentification du contenu de la zone de mémoire programmée, effectuée après l'achèvement d'une modification de données, la mémoire ( FS1 ... FSn ) à drapeau est remise dans son état de base.

2. Procédé d'authentification du contenu d'une zone de mémoire non volatile, dans laquelle on peut écrire et que l'on peut effacer électriquement, comprenant les stades dans cet ordre :
a ) on adresse la zone de mémoire,
b ) on adresse en même temps que le stade a ) une mémoire à drapeau, associée à la zone de mémoire, non volatile, dans laquelle on peut écrire et qui peut être effacée de façon électrique, pour indiquer une variation du contenu de la zone de mémoire,
c ) on modifie le contenu de la zone de mémoire,
d ) on modifie en même temps que le stade c ) l'état de la mémoire à drapeau,
e ) on authentifie le contenu de la zone de mémoire après achèvement de la modification de données et
f ) on remet la mémoire à drapeau, associée à la zone de mémoire, dans l'état de base si l'authentification est positive.
